Europäisches Patentamt

European Patent Office

Office européen des brevets

(11) Veröffentlichungsnummer: **0 367 914**

**A1**

(12) **EUROPÄISCHE PATENTANMELDUNG**

(21) Anmeldenummer: **89114804.1**

(22) Anmeldetag: **10.08.89**

(51) Int. Cl.⁵: **C04B 40/00, B09B 3/00**

(30) Priorität: **15.10.88 DE 3835140**

(43) Veröffentlichungstag der Anmeldung:
**16.05.90 Patentblatt 90/20**

(84) Benannte Vertragsstaaten:
**AT BE CH DE ES FR GB IT LI LU NL SE**

(71) Anmelder: **Eirich, Hubert**
**Sandweg 16**
**D-6969 Hardheim(DE)**

Anmelder: **Eirich, Paul**
**Bahnhofstrasse 22**
**D-6969 Hardheim(DE)**

Anmelder: **Eirich, Walter**
**Spessartweg 16**
**D-6969 Hardheim(DE)**

(72) Erfinder: **Eirich, Hubert**
**Sandweg 16**
**D-6969 Hardheim(DE)**
Erfinder: **Eirich, Paul**
**Bahnhofstrasse 22**
**D-6969 Hardheim(DE)**
Erfinder: **Eirich, Walter**
**Spessartweg 16**
**D-6969 Hardheim(DE)**

(74) Vertreter: **Weber, Dieter, Dr. et al**
**Willrath Weber und Seiffert Postfach 6145**
**Gustav-Freytag-Strasse 25**
**D-6200 Wiesbaden 1(DE)**

(54) **Verfahren zur Herstellung auslaugfester Agglomerate.**

㊇ Ein Verfahren zur Herstellung auslaugfester Agglomerate aus feinteiligen Abfallstoffen durch Vermischen der feinteiligen Abfallstoffe mit einer wäßrigen kolloidalen Lösung eines hydraulischen Bindemittels unter Einstellung des Wassergehaltes des Gemisches auf eine agglomerierfähige Konsistenz, durch Agglomerieren des Gemisches unter Bewegung und durch anschließende Härtung ist dadurch gekennzeichnet, daß man die kolloidale Lösung des hydraulischen Bindemittels durch Naßmahlen gewinnt und die Agglomerierung in einem nachgeschalteten Mischer mit Knet- und Rollwirkung durchführt.

**Verfahren zur Herstellung auslaugfester Agglomerate**

Die Erfindung betrifft ein Verfahren zur Herstellung auslaugfester Agglomerate aus feinteiligen Abfallstoffen durch Vermischen der feinteiligen Abfallstoffe mit einer wäßrigen kolloidalen Lösung eines hydraulischen Bindemittels, Agglomerieren des Gemisches und anschließende Härtung.

Das stetig zunehmende Umweltbewußtsein führt dazu, daß immer mehr Abfallstoffe, die bisher normal deponiert wurden, als umweltschädlich bekannt werden. So war es in der Vergangenheit üblich, beispielsweise Aschen aus Müllverbrennungsanlagen oder der Klärschlammverbrennung sowie Filterstäube auf eigens hierfür angelegten Halden oder auf normalen Mülldeponien zu lagern. Neuere Erkenntnisse zeigten jedoch, daß aus solchen Aschen und Stäuben während der Lagerung häufig giftige Stoffe, wie Schwermetalle, durch Regenwasser ausgewaschen und über das Grundwasser verteilt werden.

Die CH-A-649 233 beschreibt ein Verfahren zur Ab- und Endlagerung feinteiliger Abfallstoffe, bei denen die Abfallstoffe mit einem hydraulischen Bindemittel und der zur Härtung desselben erforderlichen Menge an Wasser zu einer gieß- bzw. fließfähigen Mischung vermischt werden. Die Mischung wird entweder in diesem gieß- bzw. fließfähigen Zustand unmittelbar in einen Deponieraum eingebracht und dort als Masse zum Aushärten gebracht oder zunächst in eine Form eingefüllt und darin ausgehärtet, worauf der so gewonnene Formling in den Deponieraum überführt wird. Die Nachteile dieses Verfahrens bestehen darin, daß man große Mengen des hydraulischen Bindemittels benötigt und daß wegen der Porosität der gehärteten Bindemittel keine ausreichende Auslaugfestigkeit erzielbar ist. Der Abfallstoff kann erst unmittelbar vor der Deponie mit Bindemittel versetzt werden. Er bleibt also während der gesamten Zwischenlagerung als gefährlicher Stoff erhalten.

Aus der EP-A-0 208 871 ist ein Verfahren zur Herstellung auslaugfester Agglomerate aus feinteiligen Abfallstoffen durch Vermischen derselben mit einer wäßrigen kolloidalen Lösung eines hydraulischen Bindemittels unter Einstellung des Wassergehaltes des Gemisches auf eine agglomerierfähige Konsistenz, durch Agglomerieren des Gemisches unter Bewegung und anschließende Härtung bekannt. Der Aufschluß des hydraulischen Bindemittels unter Bildung der kolloidalen Lösung erfolgt in diesem Falle unter Verwendung von Zwangsmischern.

Das Aufschließen des Bindemittels bedarf erheblicher Scherkräfte, um die gebildeten Dichten kolloidaler Teilchen vom Bindemittelkorn abzureiben, so daß der noch nicht aufgeschlossene Kern des Bindemittelkornes ebenfalls dem Wasser zugänglich wird. Das aus der EP-A- 0 208 871 bekannte Verfahren unter Verwendung von Zwangsmischern hat den Nachteil, daß die für den Aufschluß erforderlischen Scherkräfte bzw. Drehzahlen erheblich höher als die für das Agglomerieren erforderlichen Scherkräfte sind. Das Drehzahlverhältnis dieser beiden Verfahrensschritte liegt in der Größenordnung von 10 : 1, was für die zu verwendeten Zwangsmischer großen maschinentechnischen Aufwand bedeutet.

Die der Erfindung zugrundeliegende Aufgabe bestand somit darin, das aus der EP-A-0 208 871 bekannte Verfahren zu verbessern. Insbesondere soll die Aufbereitungszeit verkürzt und der Aufschluß des Bindemittelkorns verbessert und die Abbindezeit des Bindemittels bzw. die Erhärtungszeit des Agglomerats verkürzt werden.

Das erfindungsgemäße Verfahren zur Herstellung auslaugfester Agglomerate aus feinteiligen Abfallstoffen durch Vermischen der feinteiligen Abfallstoffe mit einer wäßrigen kolloidalen Lösung eines hydraulischen Bindemittels unter Einstellung des Wassergehaltes des Gemisches auf eine agglomerierfähige Konsistenz, durch Agglomerieren des Gemisches unter Bewegung und durch anschließende Härtung ist dadurch gekennzeichnet, daß man die kolloidale Lösung des hydraulischen Bindemittels durch Naßmahlen gewinnt und die Agglomerierung in einem nachgeschalteten Mischer mit Knet- und Rollwirkung durchführt.

Die Naßmühlen erzeugen weit größere Scherkräfte als Zwangsmischer, so daß die Aufschlußzeit gegenüber der Verwendung von Zwangsmischern herabgesetzt wird. Außerdem lassen sich Naßmühlen einfacher warten, was das Verfahren ebenfalls vereinfacht. Schließlich kann man mit der erfindungsgemäßen Kombination einer Naßmühle mit einem Zwangsmischer das Verfahren kontinuierlich ausführen, was die Durchführung des Verfahrens weiter vereinfacht und beschleunigt.

Als Vorrichtungen zum Naßmahlen kommen besonders Scheibenmühlen, Kugelmühlen oder bevorzugt Rührwerkskugelmühlen in Betracht. Diese bestehen gewöhnlich aus einem rohrförmigen, von den Kugeln gefüllten Behälter mit einer im wesentlichen über die ganze Länge des Behälters sich erstreckenden, mit Rührscheiben,-stiften oder einem glatten Rotor besetzten Rührwelle.

Die Naßmühlen, insbesondere Rührwerkskugelmühlen haben den zusätzlichen Vorteil, daß sie durch die Energieeinleitung die wäßrige kolloidale Lösung des hydraulischen Bindemittels erwärmen und so das für die Einstellung der agglomerierfähigen Konsistenz manchmal erforderliche Erhitzen erleichtern.

Kolloidale Lösungen von Bindemitteln neigen in der Regel zu einem schnellen Abbinden. Aus diesem Grund ist es meist erforderlich, den Innenraum der Aufschlußeinrichtung auszuwaschen, um ein Ansetzen von Bindemittelablagerungen zu verhindern. Im Gegensatz zu einem großen Innenraum eines Zwangsmischers kann die relativ kleine Kammer einer Naßmühle, wie insbesondere einer Rührwerkskugelmühle, mit einer kleineren Wassermenge ausgewaschen werden. Für dieses Auswaschen verwendet man zweckmäßig einen Teil des Aufschließwassers. Dieses kann nach dem Spülvorgang zu nachfolgendem Aufschließen von Bindemittel zurückgeführt werden.

Ist die für das Agglomerieren erforderliche Wassermenge grösser als die für den Bindemittelaufschluß unter Bildung der kolloidalen Lösung erforderliche Menge, kann das Wasch- oder Spülwasser nach dem Spülvorgang in den Zwangsmischer eingeführt werden. Wird dagegen für das Agglomerieren etwa die gleiche Wassermenge wie für das Aufschließen des Bindemittels benötigt, kann am Ende eines Ansatzes oder bei kontinuierlichem Arbeiten intermittierend die Naßmühle durchgespült und das Spülwasser anschließend zu dem Behälter des Anmachwassers zurückgeführt werden.

Bei kontinuierlichem Arbeiten gestaltet sich der Spülvorgang besonders einfach. In diesem Fall wird in Zeitintervallen die Bindemittelzufuhr zu der Naßmühle, wie der Rührwerkskugelmühle, unterbrochen, während das Wasser weiter in die Vorrichtung einfließt und als Spülwasser dient und nach dem Spülen zu dem Aufschlußwasser zurückgeführt wird.

Wie erwähnt, ist es besonders vorteilhaft, daß das erfindungsgemäße Verfahren ein kontinuierliches Arbeiten ermöglicht. Dabei kann die Aufschlußzeit auf etwa zehn bis sechzig Sekunden verkürzt werden und liegt vorzugsweise im Bereich von etwa dreißig Sekunden.

Die Bindemittelteilchen der kolloidalen Lösung sind kleiner als die üblichen Teilchengrößen feinteiliger Abfallstoffe, wie Aschen von Müllverbrennungsanlagen oder Klärschlammverbrennungsanlagen sowie Filterstäuben, so daß jedes Abfallstoffteilchen von einer dünnen Bindemittelschicht eingeschlossen wird. Jede Granalie des Agglomerates besteht also aus einzelnen, jeweils von Bindemittelpartikeln umhüllten Teilchen des zu deponierendes Abfallstoffes, so daß auch mechanische Beschädigungen einer solchen Granalie den eingeschlossenen Abfallstoff nicht der Auslaugwirkung von Regenwasser zugänglich machen, wie dies der Fall wäre, wenn die Granalie als Ganzes von einer Bindemittelschicht umhüllt würde.

Weiterhin ergibt die kolloidale Lösung eine porenfreie und wasserdichte Umhüllung, was im Gegensatz zu normalen verarbeitetem hydraulischem Bindemittel steht. Daraus ergibt sich, daß das vorliegende Verfahren zu absolut auslaugfesten Agglomeraten führt.

Schließlich erhält man die diskutierte Auslaugfestigkeit mit sehr geringen Bindemittelmengen, da auf den Teilchen des zu deponierenden Abfallstoffes ein sehr dünner Bindemittelfilm ausgebildet wird und dieser ausreicht, eine Auslaugfestigkeit zu erhalten und die Einzelteilchen zu deponierfähigen Agglomeraten zusammenbacken zu lassen. Die Verwendung geringer Bindemittelmengen und das daraus resultierende geringe Volumen führt andererseits zu einem kostengünstigen Verfahren, dessen Endprodukt weniger Deponieplatz beansprucht, was bei Entsorgungsverfahren von besonderer Bedeutung ist.

Als Bindemittel für das erfindungsgemäße Verfahrenn kommen an sich alle hydraulischen Bindemittel in Betracht, soweit sie mit Wasser zu kolloidalen Lösungen aufschließbar sind. Insbesondere bevorzugt sind dabei als hydraulische Bindemittel Zement oder Kalk.

Zement läßt sich durch Einsatz entsprechender Scherkräfte in Wasser zu einer kolloidalen Lösung aufbereiten, die eine gelartige Konsistenz hat. Diese Masse wird auch als Kolloidalzement bezeichnet.

Die Verwendung von Kalkhydrat als Bindemittel hat den Vorteil, daß Kalkhydrat im allgemeinen eine noch größere Feinheit als Zement besitzt, so daß sich Kalkhydrat insbesondere für sehr feinteilige Abfallstoffe eignet. Selbstverständlich können auch Kombinationen von Zement und Kalk eingesetzt werden, was besonders dann von Interesse sein dürfte, wenn das einzuhüllende Material eine ungünstige Kornverteilung besitzt, bei der verbleibende große Poren durch Füllstoff gefüllt werden sollen.

Das Entstehen von Agglomeraten bei dem erfindungsgemäßen Verfahren ist von besonderem Vorteil für die Entsorgung, da derartige Agglomerate problemlos mit herkömmlichen mechanischen Fördergeräten transportiert und in üblicher Weise deponiert werden können, ohne daß bei windigem Wetter Staubentwicklung zu befürchten wäre.

Es wurde bereits erwähnt, daß relativ kleine Bindemittelmengen ausreichen, auslaugfeste Überzüge zu bekommen. Zweckmäßig verwendet man 3 bis 15, vorzugsweise 5 bis 10 Gewichts-% hydraulisches Bindemittel, bezogen auf die Menge der zu agglomerierenden Abfallstoffe. Da es sich zudem um relativ preiswerte Bindemittel handelt, ist ersichtlich, daß das Gesamtverfahren hinsichtlich der notwendigen Ausgangsstoffe äußerst preisgünstig ist.

Der Aufschluß erfolgt mit einer solchen Wassermenge, die für die erforderliche Hydratisierung des Bindemittels und als Suspendiermittel ausreicht. Zweckmäßig liegt beim Aufschließen das Gewichtsverhältnis von Wasser zu hydraulischem Bindemittel über 0,5 : 1, besonders zwischen 0,7 und 2,0. Selbstverständlich kann beim Aufschluß des hydraulischen Bindemittels mehr Wasser verwendet werden, doch gibt dies keine zusätzlichen Vorteile, sondern den Nachteil erhöhten Energieverbrauchs und größerer Behältnisse während des Aufschlusses.

Der Aufschluß erfolgt durch Einwirkung von Scherkräften auf die wäßrige Suspension des Bindemittels. Die Aufschlußzeit hängt von der Menge des Bindemittels des Wassers sowie der Stärke der Scherkräfte, d.h. der eingeführten Energie ab. Der Aufschluß ist beendet, wenn bei Aufhebung der Scherkräfte, d.h. nach dem Ablassen aus der Naßmühle, das Aufschlußgemisch im wesentlichen nicht mehr sedimentiert, sondern eine stabile kolloidale Lösung bleibt.

Nach dem Aufschließen des hydraulischen Bindemittels wird die so erhaltene kolloidale Lösung mit den zu agglomerierenden anteiligen Abfallstoffen vereinigt, und erforderlichenfalls unter Wasserzugabe wird das Gemisch auf eine agglomerierbare Konsistenz eingestellt. Eine agglomerierfähige Konsistenz erhält man im allgemeinen dann, wenn das zu agglomerierende Gemisch 5 bis 30, vorzugweise 10 bis 20 Gewichts-% Wasser, bezogen auf die zu agglomerierenden Abfallstoffe, enthält.

Das Agglomieren kann im Grundsatz mit jedem beliebigen Zwangsmischer erfolgen, mit dem bekannterweise pelletisiert werden kann. Er arbeitet gewöhnlich mit niedriger Drehzahl.

Damit die Agglomerate transportfähig werden, müssen sie gehärtet werden. Bei Verwendung von Kalkhydrat als Bindemittel kann das Abbinden oder Härten durch Zufuhr von Kohlendioxid beschleunigt werden, da hierdurch das Kalkhydrat zu CaCO, karbonisiert wird. Als Kohlendioxidquelle können Feuerungsabgase genutzt werden.

Die Härtung von Kolloidalzement erfolgt durch chemische Reaktionen, die für Zement an sich bekannt sind.

Die Abbinde- oder Härtungsgeschwindigkeit des hydraulischen Bindemittels kann durch Wärmezufuhr erhöht werden. Diese kann bereits während des Mischens und Agglomerierens zugeführt werden, wie durch Einführen von warmem Wasser oder Wasserdampf, durch Verwendung warmer zu agglomerierender Abfallstoffe, wie von Flugstäuben aus Elektrofiltern, oder durch Einführung von Wärme von Feuerungsanlagen, die sich im Regelfall an der Aufbereitungsanlage befinden. Durch das Anwärmen kann entweder kolloidale Lösung des hydraulischen Bindemittels oder anschließend die gesamten Mischung beispielsweise auf eine Temperatur von 50 bis 60°C gebracht werden, was zu einer relativ schnellen Entwicklung der erforderlichen Frühfestigkeit führt, und zwar schneller als die Wärmezufuhr von außen.

Falls bei kälterem Klima eine zusätzliche Wärmezufuhr von außen erforderlich ist, kann dies unter Benutzung der Abwärme der benachbarten Feuerungsanlage erfolgen. So bieten sich unterschiedliche Möglichkeiten an. Beispielsweise kann der Raum oder Behälter, in dem die Härtung der Agglomerate stattfindet, mit Wasserdampf beaufschlagt werden, der durch die Abgase der Feuerung erzeugt wurde. In einem Wärmetauscher kann Frischluft durch die Abgase der Feuerung aufgeheizt und als Heißluft in die Härtekammer geblasen werden. Zur Bewahrung der für das Abbinden des Zementes erforderlichen Luftfeuchtigkeit wird zweckmäßig gleichzeitig mit der Heißluft auch Wasser in die Härtekammer eingeführt.Bei der Verwendung von Kalk bzw. Kalkhydrat als Bindemittel und/oder Füller können auch direkt Kohlendioxide aus den Abgasen in die Härtekammer eingeleitet werden.

Die Dauer des Abbindens oder Härtens hängt von der gewünschten Festigkeit sowie den Härtungsbedingungen, wie Temperatur, $CO_2$-Konzentration, usw. ab.

Im allgemeinen liegt die Härtungsdauer im Bereich von 2 bis 10 Stunden bei Wärmezufuhr. Ohne Wärmezufuhr kann sie bis zu 20 Stunden oder mehr betragen.

Das Abbinden oder Härten erfolgt zweckmäßig in einem von dem Mischgranulator getrennten Raum. Hierzu können die frisch erzeugten Agglomerate zweckmäßig in Behältnissen, wie Palettenkörben, Gitterboxen oder dergleichen, in eine geschlossene Härtungskammer gefördert und dort für die Härtung erforderlichen oder zweckmäßigen Bedingungen bezüglich Temperatur, des Feuchtigkeitsgehaltes, des $CO_2$-Gehaltes usw. ausgesetzt werden.

Die zu agglomerierenden Abfallstoffe, wie Aschen oder Filterstäube,besitzen im allgemeinen und für das vorliegende Verfahren bevorzugt eine Teilchenfeinheit, bei der 50 % der Körner einen Durchmesser von höchstens 100, vorzugsweise von höchstens 50, besonders von höchstens 30 $\mu$m haben. Demgegenüber liegen die Teilchengrößen der hydraulischen Bindemittel in kolloidaler Lösung erheblich geringer, wie in der Größenordnung von etwa 0,01 $\mu$m.

Wenn es sich bei den zu agglomerierenden Abfallstoffen um Aschen oder insbesondere um Flugstäube aus Elektrofiltern handelt, liegen die Temperaturen derselben meistens über 150°C. Zur Vermeidung von Beeinträchtigungen des hydraulischen Bindemittels sollte die Temperatur gewöhnlich unter 100°C, günstiger unter 60°C liegen.Um das zu erreichen, kann das Abfallstoffmaterial zunächst in den Mischgranulator gegeben werden. Durch die Zugabe einer zusätzlichen Kühlwassermenge und das daraus resultierende Verdampfen von Wasser wird die Temperatur auf einen Wert unter 100°C herabgesetzt. Die Zugabe der kalten kolloidalen Lösung hält dann eine Gemischtemperatur im Bereich von 50 bis 60°C ein.

4

EP 0 367 914 A1

Wenn besonders temperaturempfindliche Zemente verwendet werden, besteht die Möglichkeit, einen Teil des Agglomerierwassers zusammen mit dem Kühlwasser statt in Form der kolloidalen Lösung des Kolloidalzementes abzugeben. Auf diese Weise erfolgt eine Abkühlung der zu agglomerierenden Abfallstoffe nicht nur durch Verdampfung, sondern auch durch einfachen Wärmetausch während der Mischung durch Zugabe von Zusatzwasser, z.B. auf 70 bis 80°C, so daß der Kolloidalzement bei der Zugabe bereits auf einen feinteiligen Abfallstoff mit geringerer Temperatur trifft.

Die auf diese Weise erzeugten Agglomerate könne gefahrlos transportiert und auf normalen Deponien abgelagert werden. Gegebenenfalls können solche Agglomerate auch als Zuschlagstoffe für die Betonerzeugung eingesetzt werden.

| Beispiel 1 | | |
|---|---|---|
| Zement | 5 kg | |
| Wasser | 20 kg | (für das Agglomerieren erforderliche |
| | 25 kg | Wassermenge - hiervon 5 kg erforderlich für |
| Abfallstoff | 100 kg | den Bindemittelaufschluß und 15 kg für |
| | | Spülwasser verfügbar) |
| | 125 kg | |

5 kg Zement werden in 5 kg Wasser in einer Rührwerkskugelmühle kolloidal aufgeschlossen, bis er nicht mehr sedimentiert. Die Bearbeitungszeit für den Aufschluß beträgt ca. 60 Sekunden. Aus der Rührwerkskugelmühle wird die wäßrige kolloidale Lösung kontinuierlich in einen Zwangsmischer überführt, und 100 kg Asche werden zugegeben. Nach dem Verteilen der Suspension in der Asche werden die restlichen 15 kg Spülwasser durch die Mühle dem Mischer zugegeben, bis eine granulierfähige Konsistenz erzielt wird, die unter Einwirkung langsam laufender geeigneter Aufbereitungswerkzeuge Granulate bildet.

| Beispiel 2 | | |
|---|---|---|
| Zement | 10 kg | |
| Wasser | 15 kg | (für Hydratisierung des Zementes und als Granulierfeuchte) |
| | 25 kg | |
| Asche | 100 kg | |
| | 125 kg | |

Da in diesem Fall die für den Aufschluß erforderliche Wassermenge mit der für die Agglomerisierung erforderlichen Wassermenge übereinstimmt, wird intermittierend die Rührwerkskugelmühle mit jeweils 15 kg Wasser durchgespült, welches anschließend dem Vorratsbehälter für das Aufschlußwasser zurückgeführt wird.

**Ansprüche**

1. Verfahren zur Herstellung auslaugfester Agglomerate aus feinteiligen Abfallstoffen durch Vermischen der feinteiliegen Abfallstoffe mit einer wäßrigen kolloidalen Lösung eines hydraulischen Bindemittels unter Einstellung des Wassergehaltes des Gemisches auf eine agglomerierfähige Konsistenz, durch Agglomerieren des Gemisches unter Bewegung und durch anschließende Härtung,
**dadurch gekennzeichnet,** daß man die kolloidale Lösung des hydraulischen Bindemittels durch Naßmahlen gewinnt und die Agglomerierung in einem nachgeschalteten Mischer mit Knet- und Rollwirkung durchführt.

2. Verfahren nach Anspruch 1, dadurch gekennzeichnet, daß man das hydraulische Bindemittel mit einer Wassermenge entsprechend einem Gewichtsverhältnis von Wasser zu hydraulischem Bindemittel über 0,5 : 1, vorzugsweise zwischen 0,7 und 2,0, zu der kolloidalen Lösung aufschließt.

3. Verfahren nach Anspruch 1 oder 2, dadurch gekennzeichnet, daß man kontinuierlich arbeitet und während einer Dauer von zehn bis sechzig Sekunden aufschließt.

5

4. Verfahren nach einem der Ansprüche 1 bis 3, dadurch gekennzeichnet, daß man für den Aufschluß des hydraulischen Bindemittels eine Scheibenmühle, Kugelmühle oder bevorzugt eine Rührwerkskugelmühle verwendet.

5. Verfahren nach Anspruch 4, dadurch gekennzeichnet, daß man eine Rührwerkskugelmühle verwendet, die einen rohrförmigen, von den Kugeln gefüllten Behälter mit einer im wesentlichen über die ganze Länge des Behälters sich erstreckenden, mit Rührscheiben,- stiften oder einem glatten Rotor besetzten Rührwelle aufweist.

6. Verfahren nach einem der Ansprüche 1 bis 5, dadurch gekennzeichnet, daß man einen Teil des für das Befeuchten der Abfallstoffe erforderlichen Wassers zum Nachspülen der Naßmahleinrichtung verwendet.

7. Verfahren nach Anspruch 6, dadurch gekennzeichnet, daß man das Spülwasser zurückführt und zum nachfolgenden Aufschließen von hydraulischem Bindemittel verwendet.

8. Verfahren nach Anspruch 6 und 7, dadurch gekennzeichnet, daß man bei kontinuierlichem Arbeiten die Bindemittelzufuhr zu der Naßmahleinrichtung in Intervallen unterbricht, das weiterfließende Wasser als Spülwasser verwendet und nach dem Spülen dieses zu dem Aufschlußwasser zurückführt.

9. Verfahren nach einem der Ansprüche 1 bis 8, dadurch gekennzeichnet, daß man als hydraulisches Bindemittel Zement und/oder Kalk verwendet.

10. Verfahren nach einem der Ansprüche 1 bis 9, dadurch gekennzeichnet, daß man 3 bis 15, vorzugsweise 5 bis 10 Gew.-%, bezogen auf die zu agglomerierenden Abfallstoffe, an hydraulischem Bindemittel verwendet.

11. Verfahren nach einem der Ansprüche 1 bis 10, dadurchgekennzeichnet, daß man den Wassergehalt des Gemisches auf 5 bis 30, vorzugsweise 10 bis 20 Gew.-%, bezogen auf die zu agglomerierenden Abfallstoffe, einstellt.

12. Verfahren nach einem der Ansprüche 1 bis 11, dadurch gekennzeichnet, daß man die Abfallstoffe mit einer Feinteiligkeit verwendet, bei der 50 % der Körner einen Durchmesser von höchstens 100, vorzugsweise von höchstens 50, besonders von höchstens 30 $\mu$m haben.

13. Verfahren nach einem der Ansprüche 1 bis 12, dadurch gekennzeichnet, daß man die Agglomerate unter Zufuhr von Wärme, vorzugsweise während 2 bis 10 h, härtet.

14. Verfahren nach einem der Ansprüche 1 bis 13, dadurch gekennzeichnet, daß man unter Wärmezufuhr und/oder $CO_2$-Zufuhr härtet.

15. Verfahren nach einem der Ansprüche 1 bis 14, dadurch gekennzeichnet, daß man während des Mischens Wärme, insbesondere in Form von Wasserdampf, zuführt,

16. Verfahren nach einem der Ansprüche 1 bis 15, dadurch gekennzeichnet, daß im Falle der Verwendung heißer feinteiliger Abfallstoffe diese vor dem Vermischen mit dem aufgeschlossenen hydraulischen Bindemittel auf eine Temperatur unter 100 °C, vorzugsweise zwischen 40 und 60 °C, gekühlt werden.

17. Verfahren nach einem der Ansprüche 1 bis 16, dadurch gekennzeichnet, daß man als feinteilige Abfallstoffe Aschen von Müll- oder Klärschlammverbrennungsanlagen oder Filterstäube, insbesondere solche mit Schwermetallgehalten, verwendet.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | EP-A-0 208 871 (EIRICH) <br> * Ansprüche 1-11 * | 1 | C 04 B 40/00 <br> B 09 B 3/00 |
| A | | 9-17 | |
| | --- | | |
| Y | DE-A-3 444 686 (KLINGSCH) <br> * Seite 5, letzter Absatz - Seite 7, letzter Absatz; Ansprüche 1,6,11 * | 1 | |
| | --- | | |
| A | DE-A-3 131 697 (VAHLBRAUK) <br> * Seite 4, Zeile 24 - Seite 6, Zeile 9 * | 1,9,17 | |
| | --- | | |
| A | THE ENGINEER, Band 187, 11 März 1949; <br> "The production of Colloidal Concrete" <br> * Ingesamt * | | |
| | --- | | |
| A | KIRK & OTHMER: "Encyclopedia of chemical Technology", 3. Ed., Band 15, Seiten 604-636, Wiley, NY, US | | |
| | ----- | | |

**RECHERCHIERTE SACHGEBIETE (Int. Cl.5)**

C 04 B
B 01 F

Der vorliegende Recherchenbericht wurde für alle Patentansprüche erstellt

| Recherchenort | Abschlußdatum der Recherche | Prüfer |
|---|---|---|
| DEN HAAG | 17-01-1990 | THEODORIDOU E. |